# EUROPEAN PATENT SPECIFICATION

(11) **EP 0 515 664 B1**
(45) Date of publication and mention of the grant of the patent: **17.03.1999**
(21) Application number: 92902945.2
(22) Date of filing: 16.12.1991
(51) Int. Cl.: G06F 1/16, G06F 3/02

(54) **LAPTOP COMPUTER HAVING INTEGRATED KEYBOARD, CURSOR CONTROL DEVICE AND PALM REST**
TRAGBARES RECHNERSYSTEM MIT INTEGRIERTER TASTATUR, CURSORSTEUERGERÄT UND HANDTELLERLEHNE
ORDINATEUR PORTATIF A CLAVIER, DISPOSITIF DE COMMANDE DE CURSEUR ET REPOSE-PAUME INTEGRES

(30) Priority: 18.12.1990 US 629263
(43) Date of publication of application: 02.12.1992
(73) Proprietor: APPLE COMPUTER, INC., Cupertino, California 95014 (US)
(72) Inventor: KRAKOWER, Jonathan, Cupertino, California (US)
(74) Representative: Wombwell, Francis
(86) International application number: US9109448
(87) International publication number: WO9211623

(56) References cited:
- EP-A- 393 846
- DE-U- 8 716 224
- US-A- 4 712 101
- US-A- 4 736 191
- US-A- 4 974 183
- US-A- 4 978 949
- US-A- 5 021 771
- IBM TECHNICAL DISCLOSURE BULLETIN. vol. 33, no. 11, April 1991, NEW YORK US page 255 'INPUT DEVICE FOR OS/2'
- IBM TECHNICAL DISCLOSURE BULLETIN. vol. 29, no. 7, December 1986, NEW YORK US page 3110 'SPLIT KEYBOARD'
- IEEE MICRO. vol. 7, no. 2, April 1987, NEW YORK US pages 8 - 14 , XP5657 KEN SAKAMURA 'THE TRON PROJECT'

## Description

### FIELD OF THE INVENTION

The present invention pertains to the field of computer systems. More particularly, the present invention relates to a laptop computer having an integrated keyboard, cursor control device and palm rest.

### BACKGROUND OF THE INVENTION

Laptop computers are presently designed with a keyboard and a display all in one package. The keyboard is mounted next to the front edge of the laptop computer and the display is usually rotatably hinged to the housing which contains the keyboard, with most of the hardware for the laptop computer being contained in the same housing. A few laptop computers also include a built-in cursor control device, which is separate from the keyboard but part of the laptop computers housing; the cursor control device is typically mounted to the left or right of the keyboard (although an isopoint cursor control device is often mounted below the spacebar of the keyboard), and the keyboard is again next to the front edge of the laptop computer. The cursor control device allows the user to control the position of a cursor or pointer on the display screen of the computer. It is often expeditious to use a cursor control device where, for example, the user is required to repetitively choose software options displayed on the display or may desire to input data in a graphics format into the computer system (e.g. drawing images on the computers display).

One prior type of a cursor control device is commonly referred to as a "mouse" which is shown in U. S. Pat. No. 4,464,652. Such mouse is a small hand-held box-like device which is coupled to the computer system by a cable and placed adjacent to the keyboard. The mouse contains a domed portion housing a ball which is free to rotate within the dome against a smooth and flat surface, which is typically a desktop. The operation of the mouse thus requires a flat, smooth surface (next to the keyboard of the computer) over which the mouse can move in an X direction, a Y direction or a combination of both. The ball rotates accordingly as the mouse moves in the X-Y directions. The rotation of the ball is then interpreted as an X-Y movement of the cursor on the display. The movement of the mouse with respect to the surface is thus parroted by the cursor on the display. A switch is provided on the mouse in order to signal to the computer, when the switch is pressed by the user, that a desired location of the cursor on the display has been selected. The combination of moving the mouse to point (with the cursor) to an image on the display screen and pressing the switch (with its normal audible and tactile feedback) while the cursor is pointing to the image to select the image is referred to as "point-and-click." The use of the point-and-click approach for controlling a computer is very effective and very "user friendly."

While the mouse of the type described is satisfactory for many applications, it has been found that disadvantages are associated with a mouse which is separate from the keyboard of a computer system. This is especially so in the case of laptop computers.

One prior disadvantage associated is that when using the mouse, the user must stop his or her hand operation on the keyboard and move his or her hand from the keyboard to grasp the mouse. This sometimes also requires that the user's eyes be shifted from the display to aid in the grasping of the mouse. The mouse is then pushed by the user's hand to move over the surface until the cursor reaches the desired spot on the display. The user then removes his or her hand from the mouse and must find the proper position for the hand on the keyboard to begin typing operations again. In many applications (e.g., word processing) the operation of the mouse results in a substantial loss in convenience and efficiency due io ihe diversion of the user's attention from the keyboard.

Another prior disadvantage associated is that when using the mouse, the surface over which the mouse must move is an essential part of the system. At times, portable computers are placed on the lap of the user and no such surface for the mouse is available. Thus, the mouse cannot be properly used with the computer while it is lap-mounted or in cases where no adjacent surface is available for operating the mouse.

Moreover, as a portable computer may be used in a laptop environment, for example by the user in a taxi cab where no base is available to place the portable computer except the user's lap, nothing is available for the user's palms or wrists to rest against. The conventional portable computer keyboard, placed close to the front edge, also does not provide the resting base for the user's palms or wrists. When a conventional portable computer is used for a period of time on a user's lap, the user is unable to support and rest the palms or wrists on something and is unable to extend the arms away from the body to reduce muscle tension. During the period of using the computer in such an environment, the user experiences a great deal of muscle fatigue in the arms and shoulders.

Because of these and other disadvantages associated with the conventional off-keyboard mouse, a need, which has previously remained unsatisfied, has existed for an arrangement having combined keyboard, palm rest and cursor control device which allows for the advantages of a mouse while allowing the hands to remain on the keyboard and without requinng a flat work surface of the type required for the off-keyboard mouse.

A number of prior art approaches are known for including a cursor positioning device onto a keyboard. One such prior art approach is shown in U.S. Patent No. 4,736,191, which describes a keyboard having a touchpad which serves as a cursor positioning device, where the touchpad is positioned immediately below the space bar of the keyboard (which is separate from the computer) so that the touchpad can be accessed by the thumb of the user without requiring the user to move his or her hand from the keyboard. However, these prior art approaches fail to disclose the desired ergonomic configuration of the integrated keyboard, cursor control device (with switches) and palm rest in a laptop computer.

Also, many of the prior art approaches still require that the user's eyes be shifted and hands be moved to manipulate the cursor positioning device. These prior art approaches may be found in the following references:
1. US Design Patent No. 285,201, issued August 19, 1986 for KEYBOARD INCLUDING TRACKBALL;
2. US Design Patent No. 291,574, issued August 25, 1987 for KEYBOARD INCLUDING TRACKBALL;
3. US Design Patent No. 292,289, issued October 13, 1987 for ELECTRONIC COMPUTER;
4. US Patent No. 4, 670,743 issued June 2, 1987 for KEYBOARD CURSOR CONTROLLER;
5. US Patent No. 4,712,101 issued December 8, 1987 for CONTROL MECHANISM FOR ELECTRONIC APPARATUS;
6. US Patent No. 4,736,191, issued April 5, 1988 for TOUCH ACTIVATED CONTROL METHOD AND APPARATUS;
7. US Patent No. 4,823,634, issued April 25, 1989 for MULTIFUNCTION TACTILE MANIPULATABLE CONTROL;
8. US Patent No. 4,896,554, issued January 30, 1990 for MULTIFUNCTION TACTILE MANIPULATABLE CONTROL;
9. German Patent Application No. DE-3045133, published January 7, 1982 for CURSOR INPUT CONTROL FOR VDU;
10. Japanese Patent Application No. 59-94133, published May 30, 1984 for DOCUMENT AND FIGURE GENERATING DEVICE; and
11. IBM Technical Disclosure Bulletin, vol. 27, No. 10B, pp.6299-6305; March 1985 for MOUSE/KEYBOARD CONCEPT INCORPORATING UNIQUE DEVICES FOR CONTROLLING CRT DISPLAY CURSORS.
12. European Patent Application No. 393,846 published October 24, 1990 for HANDLE LATCH ASSEMBLY.

These prior art approaches fail to allow the user to practice the "point and click" approach (e.g. US Patent No. 4,736,191 does not provide a switch with the cursor positioning touchpad) while also allowing the user to keep his hands on the keyboard and to rest his palms on the palm rest of the laptop computer. Moreover, the prior art does not give the user the option of pressing a switch closest to the keyboard (to click/select an image on the display screen) with either thumb while the other thumb moves a trackball and while the user's hands remain positioned over the keyboard. Furthermore, the prior art systems do not include two separate switches (covered by contoured buttons to give the user tactile feedback to help the user locate the switches without looking), one switch being closest to the keyboard and often best suited for word processing applications, and the other switch being located below the trackball and often best utilized for detail-intensive cursor positioning using one hand (e.g. index finger operating trackball while thumb of same hand operates switch) such as the drawing of graphics on the computer system.

It is an aim of the present invention to provide a sophisticated ergonomically designed laptop computer having enough space for a palm rest so that the user's hands/palms can be rested while using the keyboard on the user's lap, allowing the user to extend their arms away from the body in a more relaxed state, thereby reducing muscle fatigue in the user's arms and shoulders.

In view of the limitations of known systems and methods, preferred embodiments of the present invention aim to provide a laptop computer with a combined keyboard, palm rest and cursor control device which does not require that the user's hands be removed from the keyboard no reach for the cursor positioning device while also allowing the user to practice the "point and click" approach.

Another preferred aim is to provide a laptop computer with a combined keyboard, palm rest and cursor control device which provides a rest for the user's palms and which gives the user the option of pressing a switch closest to the keyboard with either thrumb while the other thumb moves a trackball and the user's hands are kept over the keyboard.

### SUMMARY OF THE INVENTION

According to the present invention there is provided a laptop computer as set forth in claim 1 appended hereto.

A laptop personal computer having an integrated keyboard, palm rest and cursor control device is described herein, in the preferred embodiment, the laptop personal computer includes a display screen which displays a movable cursor and further includes a keyboard for inputting data into the computer, which keyboard is typically a standard alphanumeric key/board having many keys, including a bottom row of keys. A palm rest area, which is typically a flat surface, is adjacent to the bottom row of the keyboard and is adequately large to support the user's palms and/or wrists when typing on the keyboard. A cursor positioning device, typically a trackball, is located in a cooperating recess in the palm rest area. The cursor positioning device allows the user to move the movable cursor which is displayed on a display screen to any point on a display screen. The laptop computer further comprises at least one switch means for initiating a particular function depending upon the position of the movable cursor on a display screen when the switch means is activated. The combination of a cursor positioning device and at least one switch means provides the point and click function which gives the user the ability to control the computer by pointing (with the cursor) to an image on the display screen and activating the switch means while the cursor is pointing to the image. The switch means, which is an electrical element, is usually activated (e.g. change of electrical state of the switch) by a button means which electrically isolates (and hence insulates) the user from the electrical circuitry of the computer.

In one embodiment, the laptop personal computer includes two switch means for initiating at least one signal to carry out at least one particular function which depends upon the position of the movable cursor on a display screen when either of the switch means is activated. These two switch means may be separate switches for initiating different functions or may be connected in parallel to provide one signal which carries out a single function. First and second button means may be provided for activating the first and second switch means respectively. The first button is located below the bottom row of the keyboard and above the cursor positioning device. The second button which activates the second switch means is located below the cursor positioning device. The cursor positioning device and the first and second buttons are typically substantially aligned along the midline of the palm rest, which midline is defined by a line which is centered with respect to the width of the palm rest. This line is typically perpendicular with respect to the bottom row of the keyboard and perpendicular with respect to the front edge of the laptop computer

The laptop includes a main housing and a display housing. The display housing, when closed, acts as a cover for the computer and includes the display screen which displays the movable cursor. The display housing is rotatably coupled by a hinge to the main housing. The main housing contains the conventional electronics, such as the CPU, memory, hard disk drive and/or floppy disk drive, input/output circuitry, power supply and other standard and well known electronic circuitry contained in laptop computers.

The preferred embodiment provides the user with the option of pressing the first button which is closest to the keyboard to "click"/select an image on a display screen with either thumb while the other thumb moves the trackball and while the user's hands are kept positioned over the keyboard. The contoured buttons which are used to activate the switches provide tactile feedback to the user to locate the buttons without looking. The present invention thereby allows the user to point to an image on a display screen and select the image while keeping the user's hands over the keyboard and while continuing to look at the display screen. The provision of two separate buttons allows the user to use one button (usually the top button which is closer to the keyboard) for certain applications and the other button (the bottom button) for applications where cursor controlling intensive operations are required. In alternative embodiments, the two buttons may activate a single switch and may be either mechanically coupled or may be integrally formed together, as in the case of a circular button which surrounds the trackball.

These and other features and advantages of the present invention provided for will be apparent from the accompanying drawings and from the detailed description which follows below.

### BRIEF DESCRIPTION OF THE DRAWINGS

The present invention is illustrated by way of example, and not by way of limitation, in the figures of the accompanying drawings and in which like reference numerals refer to similar elements and in which:
Figure 1 is a perspective view of a laptop computer in the raised position showing the keyboard, palm rest and cursor control device combination;
Figure 2 is another perspective view of the laptop computer in the closed position;
Figure 3 is a top view showing the arrangement of the keyboard, palm rest and cursor control device;
Figure 4A is a sectional view of the keyboard/cursor control device arrangement, taken on line 4A-4A of Figure 3;
Figure 4B is a sectional view of the keyboard/cursor control device arrangement, taken on line 4B-4B of Figure 3
Figure 5 is a perspective view showing the shape of the upper button of the cursor control device;
Figure 6A is a top view of the upper button shown in Figure 5;
Figure 6B is a sectional view of the upper button, taken on line 6-6 of Figure 6A; this view shows the slope of the upper button;
Figure 7 is a perspective view showing the shape of the lower button of the cursor control device;
Figure 8A is a top view of the lower button shown in Figure 7;
Figure 8B is a sectional view of the lower button, taken on line 8-8 of Figure 8A;
Figure 9 is a side view of the laptop computer in the closed position.
Figure 10 shows a top view of an alternative button means which surrounds the trackball.

### DETAILED DESCRIPTION

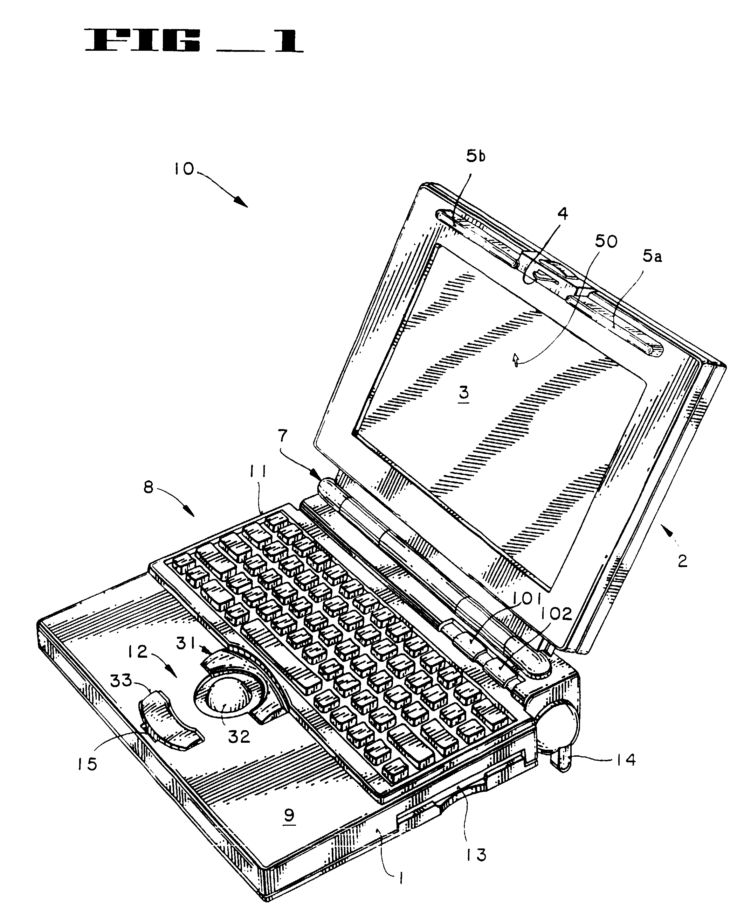

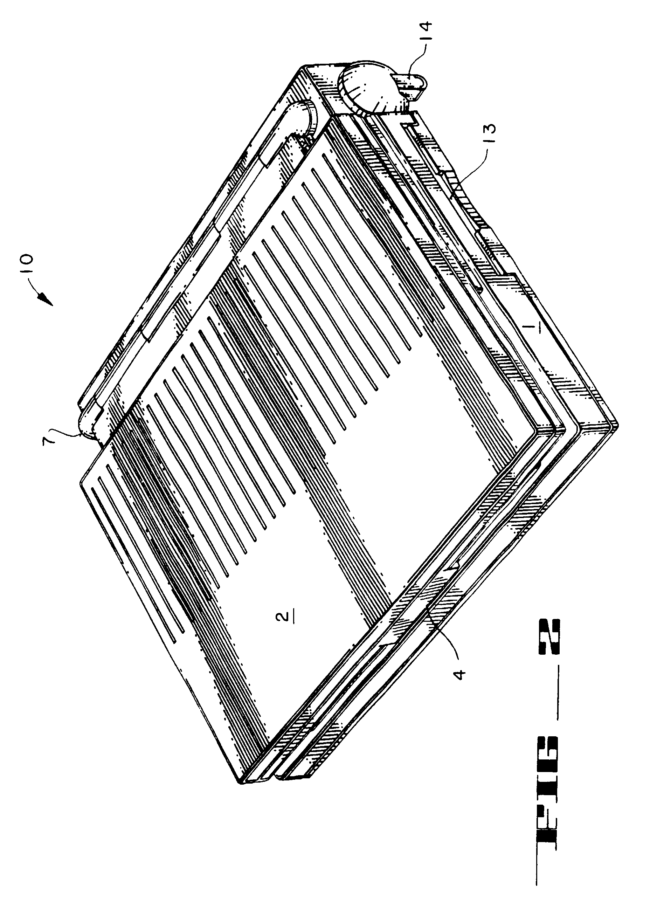

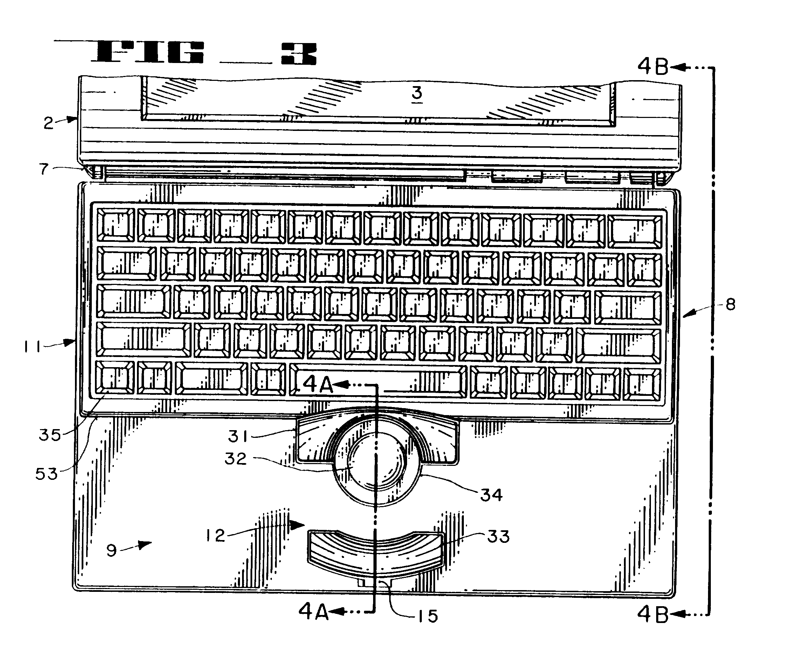

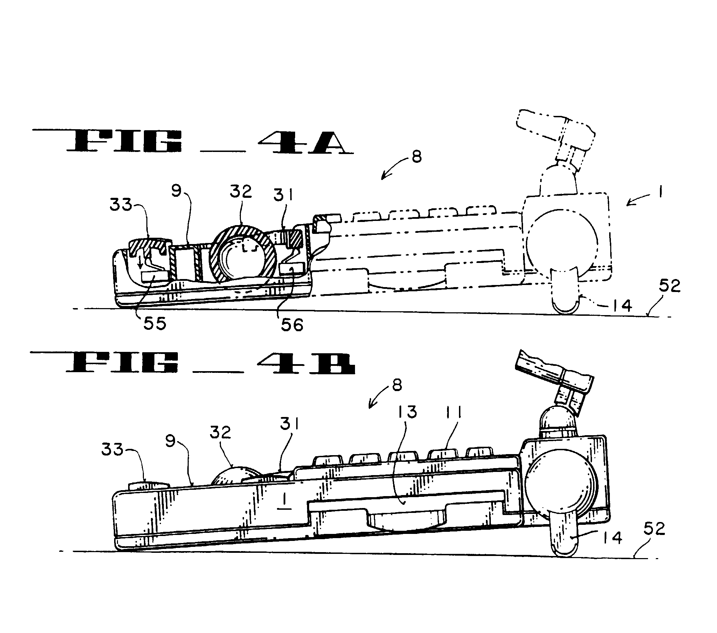

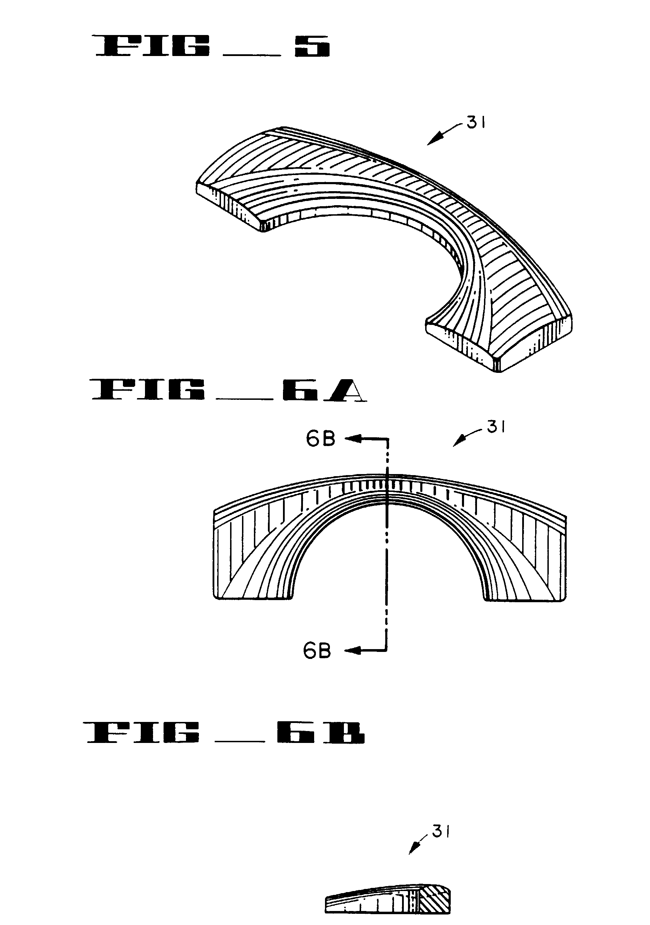

Referring to Figure 1, a perspective view of a portable personal computer 10 is shown, including the keyboard, palm rest and cursor control device combination 8 of the present invention. Although computer 10 can be any of a variety of computers, computer 10 in the present preferred embodiment is a portable computer and, more specifically, a laptop computer which is a single, integrated unit with all of its elements placed within one case and which is small enough to fit on a user's lap. Computer 10 includes a main housing 1. Main housing 1, in the preferred embodiment, is made from injection molded plastic material. Inside main housing 1, there are all the essential and well known electronic circuitry for the computer's operation, such as CPU, memory, hard disk drive and/or floppy disk drive, input/output circuitry and power supply. Such electronic circuitry for a laptop computer is well known; one example of a laptop computer is the Macintosh Portable from Apple Computer, Inc. of Cupertino, California, the assignee of the present invention.

On top of main housing 1 is the keyboard, palm rest and cursor control device combination 8. The combination 8 includes a conventional keyboard 11, a palm rest 9 and a cursor control device 12 (which includes a cursor positioning device, typically a trackball 32, and two switches which are actuated by two contoured, crescent shaped buttons 31 and 33). Keyboard 11 and cursor control device 12 allow a user to communicate with (e.g. input data into) computer 10. Palm rest 9 provides a supporting base for the user's hands to rest against when using keyboard 11. The combination 8 will be described in more detail below with reference to Figures 3-9.

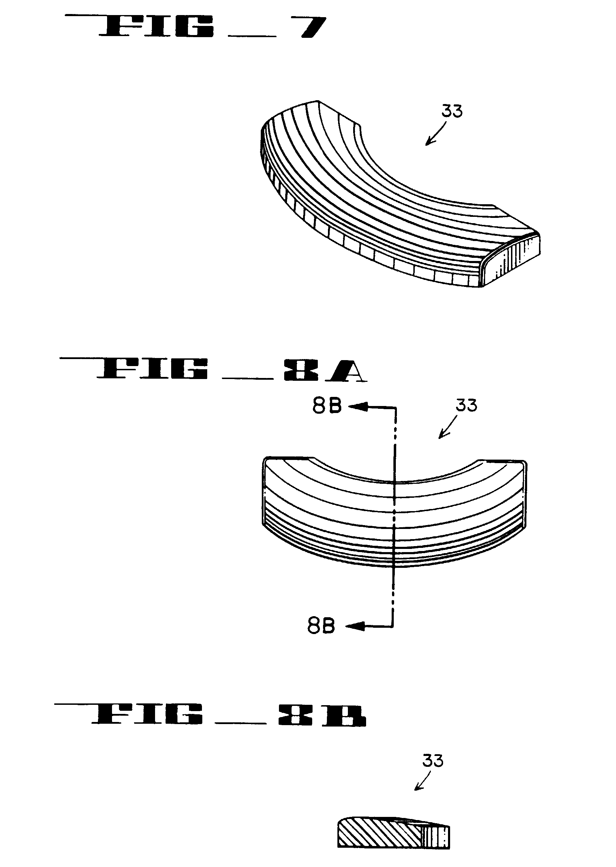

Disposed over the keyboard, palm rest and cursor control device combination 8 is a display housing 2 which contains the display screen 3. Display housing 2 is coupled to main housing 1 by a conventional hinge means 7. Hinge 7 allows the display housing 2 to act as a cover for the main housing 1 such that, from the closed position (show in Figure 2), the display housing 2 can be opened upwards, revealing the keyboard 11, palm rest 9, trackball 32 and buttons 31 and 33.

As illustrated in Figure 1, hinge 7 extends substantially across the width of main housing 1. In an alternative embodiment, hinge 7 can be made to extend completely across the width of main housing 1. Also, different types of hinges may be used with the preferred embodiment. The particular type of hinge arrangement which is used is not critical to the present invention.

Display housing 2 includes a display unit which contains a display screen 3 and associated video circuitry (not shown). In the preferred embodiment, display screen 3 is a liquid crystal display unit. In an alternative embodiment, display screen 3 can be a video monitor or any other well known display device. Display screen 3 is framed on the center of the inner wall of display housing 2. The movable cursor 50 which is positioned and moved by the cursor positioning device 32 is shown in Figure 1.

Two identical support members 5A and 5B are placed above display screen 3. The function of the two support members 5A and 5B is to keep display screen 3 from touching on keyboard 11 and cursor control device 12 when display housing 2 is in its closed position.

Display housing 2, when closed, covers the combination 8, thus protecting keyboard 11, palm rest 9 and cursor control device 12 while computer 10 is being transported. When display housing 2 is closed, display screen 3 is also covered and thereby protected. When display housing 2 is lifted upwards, display screen 3 is visible to the user.

Display housing 2 is typically held in the closed position by means of a latch assembly when computer 10 is not being used and is closed, as shown in Figure 2. The latch assembly in the preferred embodiment includes a hook element 4 on display housing 2 and a slot 15 on the top surface of main housing 1 near the button 33. When display housing 2 is closed, hook element 4 engages with corresponding slot 15 to hold display housing 2 in place. To lock cover 2 in closed position, a force is employed to press display housing 2 downward so as to make hook element 4 engage in slot 15. To release hook element 4 from slot 15, a force is employed to slide hook 4 out from engagement with slot 15 of main housing 1 so as to free hook element 4 from slot 15 and allow the display housing 2 to be raised. The hook is held in engagement in slot 15 by a spring. It will be apparent to those in the art that many alternative latching assemblies may be used to secure the display housing 2 to the main housing 1.

On the right side of main housing 1 as shown in Figure 1, a slot 13 which is part of a conventional floppy disc drive is shown. Slot 13 allows a floppy disc to be inserted into the floppy disc drive. Near the back side of the main housing 1 are two conventional sliding controls 101 and 102 which may be used to vary in the conventional manner the contrast and brightness (respectively) of the display screen 3.

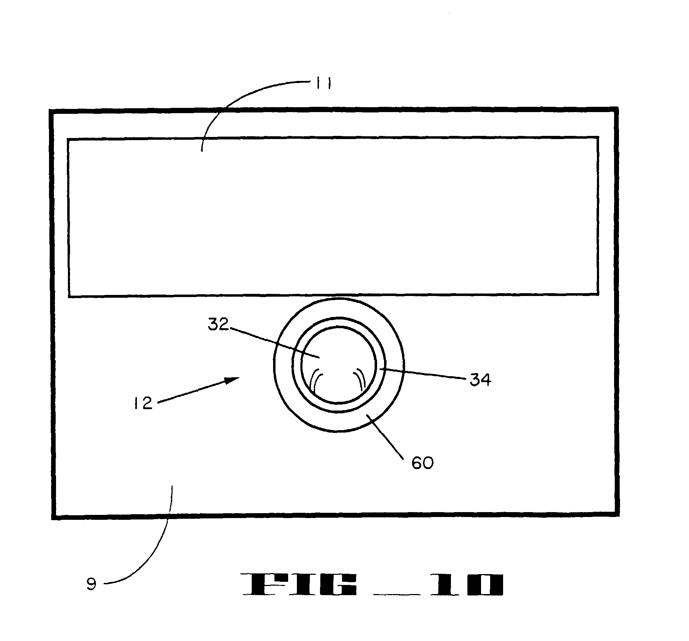

A leg 14 is also shown in Figure 1 which is rotatably attached to the rear right side wall of main housing 1. Leg 14 is retractable by rotating it upward so that the leg 14 does not extend beyond the bottom of main housing 1. In the presently preferred embodiment, another identical leg is also provided on the left side wall of main housing 1. Each leg may be set at a down position, as shown in Figure 1 with respect to the bottom of main housing 1, and numerous examples in the prior art exist for these legs. The function of legs 14, when standing against a flat surface on which main housing 1 is lying (such as desktop surface 52 shown in Figure 4A), is to give the top of the main housing 1 a slight slope of several degrees with respect to the desktop surface 52 when the user is operating the keyboard or the cursor control device (see Figures 4A, 4B and Figure 9). The inclined slope of the keyboard is often preferred by users.

Figure 3 shows keyboard, palm rest and cursor control device combination 8 with approximate dimensions on each of the various components. As is illustrated in Figure 3, combination 8 of the presently preferred embodiment has an overall length of approximately 194 mm and width of approximately 286 mm. The keyboard 11 and palm rest 9 occupy almost all of the top surface of the main housing 1, with a portion of the top surface supporting the hinge 7 and the display housing 2. As shown in Figure 3, the overall width of the main housing 1 (286 mm) is the same as the width of the palm rest 9. In an alternative embodiment, the relative sizes of keyboard, palm rest and cursor control device can be made larger or smaller (in the range of up to 25% larger or smaller).

It will be recognized that making the relative sizes of the keyboard, palm rest and cursor control device smaller by as much as 25% (or even smaller) will make the laptop computer more difficult to use in the sense that the user will have difficulty manipulating a smaller trackball or typing on a smaller keyboard; however, a smaller laptop computer will be easier to carry and otherwise transport. It will also be recognized that making the relative sizes of the keyboard, palm rest and cursor control device larger by as much as 25% (or even larger) will cause the laptop computer to be more uncomfortable to use on the lap of the user and the computer may not fit in certain circumstances where it could otherwise be used (e.g. the seat of an airplane).

Keyboard 11 is located on the upper end of the top of the main housing 1, away from the front edge of the computer, and is thereby close to hinge 7. Keyboard 11 can be a conventional "QWERTY" keyboard which includes a large, elongated space bar key in the bottom row of the keyboard. In the presently preferred embodiment, the dimensions of keyboard 11 are about 90 mm by approximately 272 mm wide. In an alternative embodiment, other types of keyboards can be employed. The specific type of keyboard (e.g. a "QWERTY" keyboard) that is used is not critical to the present invention.

The keycaps in the presently preferred embodiment are slightly smaller than standard keycaps. Moreover, the pitch spacing between the keycaps in the presently preferred embodiment for the alphanumeric keys is smaller than standard pitch spacing. The vertical pitch spacing between adjacent keycaps is 18 mm (e.g. the vertical distance between centers of the keycaps "S" and "W" for a "QWERTY" keyboard is 18 mm) and the horizontal pitch spacing for adjacent keycaps is 18.6 mm (e.g. the horizontal distance between the centers of "Q" and "W" for a "QWERTY" keyboard is 18.6 mm). It will be apparent that modifying the size of the keyboard to implement a particular embodiment of the invention will cause the modification of the size of the keycaps and the spacing between the keycaps. It can be seen from Figure 4B that the keyboard is elevated above the palm rest area; the vertical distance from the top of the keycaps to the surface of the palm rest 9 is about 9 mm in the presently preferred embodiment, however the distance can vary with other embodiments. For example, the top of the keycaps may be flush with the palm rest if the keyboard is recessed into the top of main housing 1.

Below keyboard 11 is palm rest 9 which is on the top of the main housing and extends away from keyboard 11 towards the user of the computer. The purpose of palm rest 9 is to allow the user's hands and/or wrists to rest against a surface which is an integral part of the laptop computer when using the keyboard or cursor control device, especially in the laptop environment (i.e. when the computer is resting on the user's lap rather than on a desktop). This permits the user to extend his/her arms away from the body in a more relaxed state, reducing muscle fatigue in the arms and shoulders. The space provided by palm rest 9 should be large enough to hold the user's palms or wrists. It is contemplated that a palm rest in the range of approximately 65 mm to 90 mm long (i.e. the distance from the front edge of the laptop computer to the ridge 53) should be sufficient for this purpose, although it is conceivable that a smaller palm rest would be appropriate for laptop computers dedicated to smaller users (e.g. children). Increasing the size of palm rest 9 will naturally provide more support for the user's hands and/or palms. However, palm rest 9 should not be excessively large in order not to unnecessarily enlarge the physical size of computer 10. In the presently preferred embodiment, palm rest 9 is a flat rectangular surface, which is approximately 84 mm long and 286 mm wide. In an alternative embodiment, palm rest 9 can be a surface with a gentle slope relative to the bottom surface of the main housing 1.

The positioning of keyboard 11 adjacent to hinge 7 causes the keyboard 11 to be placed away from the user, and causes the palm rest 9 to be made available for the user to extend his/her hands or wrists away from the user's body (giving "elbow room"). It also allows cursor control device 12 to be ergonomically located, as is illustrated in Figure 3, so that the user is able to operate cursor control device 12 without having to remove the hands from the "home row" position on keyboard 11.

Between keyboard 11 and palm rest 9 is the ridge 53, which separates the bottom row of the keyboard 11 from the palm rest 9. The ridge 53 is elevated above the palm rest 9 by about 4 mm and provides tactile feedback to the user to assist in locating the keyboard without looking at it. The ridge also provides a location for the user to rest the user's thumbs. In the preferred embodiment, the distance from the front edge of the main housing 1 (i.e. the edge facing the user) and the bottom row of keycaps on the keyboard is about 95 mm. The ridge 53 in the preferred embodiment is approximately 272 mm wide and 10 mm long. If the tops of the keycaps were flush with the palm rest 9, then the ridge would typically not exist.

Cursor control device 12 is mounted in the palm rest area near the center of palm rest 9, below keyboard 11 and typically below the space bar in the bottom row of keyboard 11. Cursor control device 12 allows the user to control the movement of the movable cursor on display screen 3 in the conventional manner and select a desired operation, such as the selection of a software option by moving the cursor with the cursor positioning device and by signaling selections with the switches which are activated by the buttons 31 and 33, as described below. The cursor positioning device may be any one of the well known means for positioning a cursor, including a touchpad or a trackball.

Cursor control device 12 in the preferred embodiment includes a conventional trackball 32, an upper button 31 and a lower button 33. An example of a conventional trackball can be found in the Macintosh Portable from Apple Computer, Inc. of Cupertino, California. Upper button 31 is located between trackball 32 and keyboard 11 and lower button 33 is located below trackball 32, as illustrated in Figure 3. As shown in Figure 3, upper button 31 and trackball 32 are placed on palm rest 9 closely adjacent to the space bar of keyboard 11. Trackball 32 is a round ball rotatably disposed concentrically within a round cooperating recess 34 on palm rest 9. The recess 34 and trackball 32 are both half embraced by upper button 31 (see Figures 3, 4A and 4B). Trackball 32 also includes a conventional converter coupled to it to convert the rotation of trackball 32 into electrical signals indicative of X-Y locations defined on display screen 3. Trackball 32, along with its converter, can be implemented on palm rest 9 by many well known prior art techniques, such as disclosed in the U.S. Patent No. 4,464,652, issued on August 7,1984 and assigned to the same assignee of the present invention. Trackball 32 is one of several possible conventional cursor positioning devices that may be used and the internal design of the particular trackball used in the laptop is not critical to the present invention.

In the presently preferred embodiment, the diameter of trackball 32 is approximately 30 mm, but the diameter of the trackball can be varied considerably, at least in the range of about 15 mm to over 30 mm. Larger trackballs (e.g. 45 mm in diameter) will typically require larger palm rests and will usually take up more area of the palm rest. As can be seen from Figures 4A and 4B, trackball 32 is a ball, partly appearing above the surface of palm rest 9. Trackball 32 "floats" (in the well known way that trackballs are supported) within the cooperating recess 34 and can be rotated in all directions within the recess 34. The user can use his or her thumb or finger to rotate trackball 32 within the recess 34 so as to move the cursor accordingly to a desired position on display screen 3. As also can be seen from Figures 3, 4A and 4B, trackball 32 is disposed half way into upper button 31 in order to bring trackball 32 closer to the bottom row of keyboard 11. As shown in Figure 3, the upper button 31 protrudes into a cut-out portion of the ridge 53 in order to bring the button 31 closer to the keyboard 11. In the presently preferred embodiment, the distance as shown in Figure 3 from the bottom edge of keyboard 11 to the center of trackball 32 is about 31 mm, and the diameter of the outer lip of cooperating recess 34 is about 40 mm.

Upper button 31 is a function activating button. Upper button 31 is mechanically coupled to a conventional switch means 56 to activate (e.g. change the electrical state of) the switch. It will be appreciated that the switch is an electrical component which should be isolated and insulated from the user; the button isolates the switch and provides ergonomic advantages. It will be appreciated that the button may be any mechanical means for activating and electrically insulating the user from the switch means and may, for example, be as simple as a mere membrane over a conventional membrane switch, which membrane is pressed by the user. When upper button 31 is pressed with a force, the electrical state (e.g. closed or opened) of the switch is changed, thereby signaling to the computer 10 that a command has been selected by the user or that an appropriate X-Y location has been selected. The switch can be implemented in many conventional ways (e.g. a spring loaded single pole switch or a low profile tactile membrane switch), and U.S. Patent No. 4,464,652 shows an example of a switch means and an example of making a selection (e.g. giving the computer a command) by positioning the cursor and activating the single switch. It will be understood that this switch and its associated button are in addition to the keys on the keyboard and that the switch provides an additional input to the computer which is recognized by the computer, for example in the manner described in U.S. Patent No. 4,464,652. In the preferred embodiment, the switch is kept in one electrical state (e.g. open) by a retaining means (e.g. a spring) and only placed in the other electrical state (e.g. closed) when the user presses on the button to activate the switch.

Upper button 31 is substantially a crescent-shaped bar with a half circular cut in the middle. The diameter of the cut is about 40 mm. The half circular cut of upper button 31 couples to the recess 34 which contains trackball 32. As can be seen from Figure 3, it is the half circular cut on upper button 31 that brings trackball 32 half way into upper button 31, thereby minimizing the distance from the bottom edge of keyboard 11 to the center of trackball 32. As shown in Figure 3, the edge of button 31 which is closest to keyboard 11 (back edge of button 31) is a convex edge, and the edge of button 31 which is closest to trackball 32 (front edge of button 31) is a concave edge formed from the half circular cut.

Figures 5, 6A and 6B illustrate in more detail the contoured configuration of upper button 31. As can be seen in these figures, the top surface of upper button 31 is curved downwardly in an arc toward both the front and back edges. The top surface around the half circular cut is curved downwardly in an arc toward the cut. The contoured surface of upper button 31 is best illustrated in Figure 5. The purpose of this contoured surface is to fit the curve of the human thumbs. This allows the user to easily identify and locate upper button 31 with his or her thumbs without shifting his or her eyes away from display screen 3. As can be seen from Figure 3, upper button 31 in the presently preferred embodiment is about 76 mm wide and the distance from the top of the back edge (nearest the keyboard) to the edge of the button closest to the button 33 is about 26 mm .

In the presently preferred embodiment, upper button 31 is a one piece push-down button. In an alternative embodiment, upper button 31 is a pushin button which is pushed toward the keyboard. In a further embodiment, upper button 31 is formed by two or more pieces each of which activates the switch associated with the upper button or, as described below, the upper button 31 may be mechanically coupled to the lower button 33 or may be integrally formed together with the lower button 33 (such that structurally the buttons 31 and 33 are one piece).

This arrangement of upper button 31 and trackball 32 on palm rest 9 just beneath the space bar of keyboard 11 contributes to the usefulness of the present invention. It allows the user to access upper button 31 and trackball 32 with the thumbs while maintaining the hands in the home row position on keyboard 11. This follows from the fact that a human hand has a natural triangle formed by the thumb and the other fingers. It is thus possible and convenient for the user to reach out with the thumbs for upper button 31 and trackball 32 while still being able to keep the other fingers of the hands on keyboard 11.

It is also true that in operation, the user's hands are generally kept on the home row position on keyboard 11 for the striking of keys to carry out the typing operation. In this position, all the fingers of both hands except the two thumbs are occupied with a key, and the two thumbs are left free except to strike the space bar key when necessary. The home row position for the user's hands on keyboard 11 when that keyboard is of the "QWERTY" type is the "ASDFJKL;" keys.

In typical typing operations, all the fingers except the two thumbs are gently touching on their respective keys, and the palms are placed on palm rest 9. If a key on the home row position is to be typed, the respective finger merely presses it. If the keyboard operation requires a key not on the home row to be struck, a respective finger will reach out for the key and strike it. After striking the key, the finger retreats to its home row position and is ready for another strike.

When a cursor movement is required, cursor control device 12 may be used. At this moment, the user's hands remain on the home row position of keyboard 11. The two thumbs reach down for trackball 32 and upper button 31 respectively. One thumb is on trackball 32 to control the cursor movement and the other thumb is on upper button 31 to control the generation of a signal (by activation of switch means 56) which may confirm the cursor movement or otherwise select a command. Which one of the two thumbs is responsible for trackball 32 depends entirely on the user's preference. If a right handed person operates trackball 32 and upper button 31, the right thumb will probably be on trackball 32 and the left thumb on upper button 31. However, a left handed person generally uses the left thumb for the trackball operation and the right thumb to control the upper button 31.

Assume that the user puts the right thumb on trackball 32, the left thumb is accordingly placed on upper button 31. During the cursor operation, the right thumb rotates trackball 32 in a direction to move the cursor to a desired position on display screen 3. When the cursor reaches the desired position, the left thumb then strikes upper button 31 (to activate the switch means 56) to confirm the desired position of the cursor to thereby place the cursor at a particular location in a document (e.g., a word processing document) or to make a selection of a command represented by an image which is displayed under the cursor on the display screen 3 (as in the method described in U.S. Patent No. 4,464,652). Given that the human thumbs naturally form a triangle with their other fingers and that upper button 31 and trackball 32 are placed right beneath the space bar of keyboard 11, the user's hands are able to remain on the keyboard 11 while the two thumbs can operate trackball 32 and upper button 31 to perform the "point and click" operation.

No eye shifting from display screen 3 is required to help the hands locate upper button 31 and trackball 32, and to help the hands return to their home row position on keyboard 11 from the operation of upper button 31 and trackball 32 because the user's hands can remain on the home row position during the operation of trackball 32 and upper button 31.

Lower button 33 may also be provided as part of cursor control device 12. It may provide cursor control device 12 with more functions and may give the user more options to operate cursor control device 12. Lower button 33 can generate the same signal as upper button 31 or it can generate a different signal. In the presently preferred embodiment, lower button 33 performs the same function as upper button 31 in that they both generate the same signal because switch means 55 and 56 are coupled in parallel. Alternatively by not coupling these switches in parallel, lower button 33 can be a different function activating button from upper button 31 such that the signals generated by activating switches 55 and 56 are different.

Lower button 33 is coupled to a conventional switch means 55 to activate (e.g. change the electrical state of) the switch which generates a signal to the computer indicating a selection of a command or confirmation of cursor movement. When lower button 33 is pressed with a force, the electrical state (e.g., open or closed) of the switch 55 is changed, thereby signaling to the computer 10 that a command has been selected or that an appropriate X-Y location has been selected. The switch 55 can be implemented in many conventional ways (e.g., a spring loaded single pole switch or a low profile tactile membrane switch) and U.S. Patent No. 4,464,652 shows an example of a switch means.

As is shown in Figure 3, the one piece lower button 33 is disposed a distance of approximately 45 mm below trackball 32 on palm rest 9. The button 33 is substantially crescent shaped, which facilitates the user's ability to reach the button due to the fact that a human hand has a natural ability to form two sides of a triangle in the form of the thumb and the other fingers. Thus, the left and right edges of the button are angled closer to the trackball than the center of the button allowing the index finger (when manipulating the trackball) and the thumb (when pressing the left or right edges of button 33) to form a triangle. As shown in Figure 3, the edge of the button 33 which is closest to the trackball 32 is a concave edge, and the edge of button 33 which is closest to the front of the laptop computer 10 is a convex edge. In the presently preferred embodiment, the distance from the center of trackball 32 to the center of lower button 33 is about 45 mm.

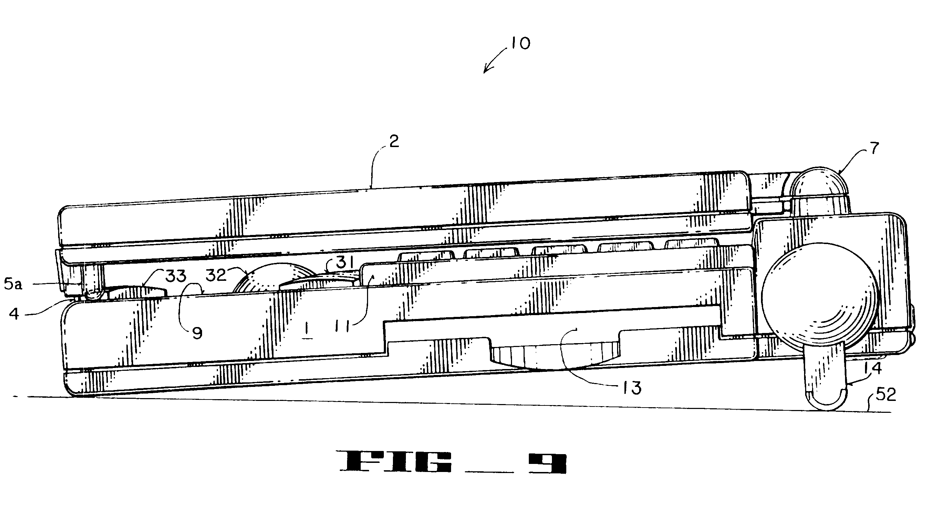

Figures 7, 8A and 8B illustrate in more detail the contour configuration of lower button 33. In Figure 7, the top surface of lower button 33 is curved downwardly in an arc toward its concave edge and the convex edge of lower button 33. The contoured surface of lower button 33 fits the natural curve of human thumbs and provides tactile feedback to help the user locate the button without looking. As can be seen from Figure 3, lower button 33 is approximately 59 mm wide and 22 mm long. Figure 8B illustrates the sectional view of lower button 33, taken on line 8-8 of Figure 8A.

In the presently preferred embodiment, lower button 33 is a one piece push-down button. In an alternative embodiment, lower button 33 is formed by two or more pieces. In other embodiments, button 33 may be mechanically coupled to button 31 or may be integrally formed together with the button 31 (such that structurally the buttons 31 and 33 are one piece).

In the presently preferred embodiment, lower button 33 is provided to facilitate the "one-hand" operation of cursor control device 12. In the "one-hand" cursor control operation, the user uses only one hand to operate cursor control device 12, either right or left hand depending on the user's habit and that hand will not be kept in the home row position. This approach may be adopted when the user is not extensively using the keyboard and is constantly engaged in the cursor operation (cursor intensive operations) in which the user needs to repetitively shift between the trackball operation and button operation, such as making drawings on screen 3. This approach may as well be adopted if the user wants to use merely one hand for cursor control operation and free the other hand for something else. In the "one-hand" cursor control operation, the user places the thumb of one hand on lower button 33 and the index finger of the same hand on trackball 32. The user can also use more than one finger simultaneously on trackball 32 to operate trackball 32 while the thumb of the same hand operates the lower button 33. Some users may find that other "one-hand" techniques are more convenient. For example, some users may prefer to use the thumb of one hand to control the trackball while the index finger of the same hand is used to press the upper button 31. Alternatively, some users may prefer to control the trackball with the index finger of one hand and use the middle finger of the same hand on the upper button.

The dual upper and lower button trackball design of cursor control device 12 offers the user maximum flexibility in using different thumb and finger combinations.

In those embodiments where switch means 55 and 56 are coupled in parallel to provide the same signal to the computer 10 or where only a single switch means is used, several alternative button means may be employed. In one embodiment, buttons 31 and 33 may be mechanically coupled together to activate a single switch; for example, buttons 31 and 33 may have posts which extend from the underside of the buttons'caps, which posts press upon a plate which itself presses upon a switch. Alternatively, buttons 31 and 33 may be connected to the same lever which activates the switch. In another embodiment, buttons 31 and 33 may be integrally formed together, as in the case where the buttons 31 and 33 are structurally one piece.

In this case the buttons 31 and 33, if housed in a main housing 1 as shown in Figure 1, would appear to be two separate buttons in that there are two separate button caps which are exposed in the palm rest, but underneath the top of the housing 1 the buttons are joined together. A further alternative embodiment is shown in Figure 10; a circular, single one-piece button 60 surrounds the recess 34 and trackball 32 and is placed immediately below the bottom row of keyboard 11 in the palm rest area 9. In this embodiment, the button 60 activates a switch means in the manner described above. The user may strike the top of the button 60 (closest to the keyboard) while keeping the hands in the home row position or may use the "one-hand" operation of the cursor control device 12 by using a finger of that hand to control the trackball 32 while using the thumb of that hand to strike the bottom portion of the button 60.

## Claims

1. A laptop personal computer comprising:
a main housing (1);
a display housing (2) including a display screen (3), said display housing being coupled to said main housing by a coupling means (7) ;
a keyboard (11) for inputting data into said laptop personal computer, said keyboard having a plurality of keys arranged in rows including a first row of keys and a second row of keys being distal from said coupling means (7), said keyboard (11) being disposed on said main housing (1);
a cursor control device (12) for moving a cursor (50) on said display screen, wherein said cursor control device controls simultaneous movement of said cursor in two directions;
and wherein the first row of keys is located proximally adjacent to said coupling means (7) which is proximally adjacent to a first portion of said display screen; and wherein said cursor control device (12) is integrated with said main housing (1);
characterized in that:
a palm rest (9) is located adjacent to said second row of keys, said palm rest (9) being a surface integrally disposed on said main housing (1) and being adequately large to support a user's palms while a user is using the keyboard or the cursor control device.

2. A laptop computer as claimed in claim 1, wherein said coupling means (7) is a rotatable hinge and wherein said first row of keys are adjacent to said rotatable hinge.

3. A laptop personal computer as claimed in claim 1, wherein said coupling means (7) is located near one end of said main housing (1) and wherein said keyboard (11) comprises a row of keys which includes home keys, and said keyboard being integrally disposed on said main housing (1) and wherein said palm rest (9) is unitarily disposed as a significant portion of said surface of said main housing (1) and being disposed to support a user's palms while allowing the user's fingers to remain on the home keys of said keyboard (11).

4. A laptop personal computer as claimed in claim 1, 2 or 3, wherein said palm rest portion (9) is configured to have a gentle slope relative to the bottom surface of said main housing (1).

5. A laptop personal computer as claimed in claim 1, 2 or 3, wherein said palm rest portion (9) is a flat surface with no slope with respect to the bottom surface of said main housing (1).

6. A laptop personal computer as claimed in any one of the preceding claims, wherein said cursor control device (12) is integrated with said palm rest (9).

7. A laptop personal computer as claimed in any one of the preceding claims, wherein said cursor control device (12) is accessible by both hands of the user while operating the keyboard (11).

8. A laptop personal computer as claimed in claim 2 or claim 3, wherein said display housing (2) when rotated into a closed position covers said keyboard (11), said cursor device (12) and said palm rest (9).

9. A laptop personal computer as claimed in claim 8, further comprising a switch means (31, 33) integrally disposed on said surface of said palm rest.

10. A laptop personal computer as claimed in claim 9, wherein said keyboard (11) is elevated above said palm rest (9).

11. A laptop personal computer as claimed in any one of the preceding claims, wherein said cursor control device (12) is a touchpad.

12. A laptop personal computer as claimed in claim 1, wherein said cursor control device (12) is disposed generally centrally on said surface of said palm rest (9).

## Patentansprüche

1. Ein Laptop-Personalcomputer, enthaltend:
ein Hauptgehäuse (1);
ein Displaygehäuse (2) mit einem Bildschirm (3), wobei das Displaygehäuse mit dem Hauptgehäuse durch Kupplungsmittel (7) verbunden ist;
eine Tastatur (11) zur Eingabe von Daten in den Laptop-Personalcomputer, wobei die Tastatur eine Vielzahl von zeilenweise angeordneten Tasten mit einer ersten Tastenzeile und einer zweiten Tastenzeile aufweist, die von den Kupplungsmitteln (7) entfernt angeordnet sind, wobei die Tastatur (11) an dem Hauptgehäuse (1) angeordnet ist;
ein Cursor-Steuergerät (12) zum Bewegen eines Cursors (50) auf dem Bildschirm, wobei das Cursor-Steuergerät gleichzeitig die Bewegung des Cursors in zwei Richtungen steuert; und
wobei die erste Tastenzeile den Kupplungsmitteln (7) proximal benachbart und letztere einem ersten Abschnitt des Bildschirms proximal benachbart angeordnet sind und wobei das Cursor-Steuergerät (12) in dem Hauptgehäuse (1) integriert ist;
**dadurch gekennzeichnet,**
daß eine Handflächenstütze (9) der zweiten Tastenzeile benachbart angeordnet ist, wobei die Handflächenstütze (9) eine auf dem Hauptgehäuse (1) integral angeordnete Oberfläche ist und ausreichend groß bemessen ist, um eine Benutzer-handfläche abzustutzen, während ein Benutzer die Tastatur oder das Cursor-Steuergerät benutzt.

2. Laptop-Computer nach Anspruch 1, wobei die Kupplungsmittel (7) als schwenkbares Scharnier ausgebildet sind und die erste Tasten zeile dem schwenkbaren Scharnier benachbart ist.

3. Laptop-Personalcomputer nach Anspruch 1, wobei die Kupplungsmittel (7) nahe eines Endes des Hauptgehäuses (1) angeordnet sind und wobei die Tastatur (11) eine Tastenzeile mit Positionstasten aufweist und wobei die Tastatur integral mit dem Hauptgehäuse (1) angeordnet ist und die Handflächenstütze (9) einteilig als wesentlicher Teil der Oberfläche ds Hauptgehäuses (1) angeordnet und derart ausgebildet ist, daß sie die Benutzerhandflächen abstützt, während die Benutzerfinger auf den Positionstasten der Tastatur (11) bleiben können.

4. Laptop-Personalcomputer nach Anspruch 1, 2 oder 3, wobei der Handflächenstützenabschnitt (9) so ausgebildet ist, daß er eine leichte Neigung relativ zur Bodenfläche des Hauptgehäuses (1) hat.

5. Laptop-Personalcomputer nach Anspruch 1, 2 oder 3, daß der Handflächenstützenabschnitt (9) eine flache Oberfläche ist, die mit Bezug auf die Bodenfläche des Hauptgehäuses (1) nicht geneigt ist.

6. Laptop-Personalcomputer nach einem der vorhergehenden Ansprüche, wobei das Cursor-Steuergerät (12) mit der Handflächenstütze (9) integriert ist.

7. Laptop-Personalcomputer nach einem der vorhergehenden Ansprüche, wobei das Cursor-Steuergerät (12) für beide Hände des Benutzers bei der Betätigung der Tastatur (11) zugänglich ist.

8. Laptop-Personalcomputer nach Anspruch 2 oder 3, dadurch gekennzeichnet, daß das Displaygehäuse (2) nach Verschwenken in eine geschlossene Position die Tastatur (11), das Cursor-Steuergerät (12) und die Handflächenauflage (9) abdeckt.

9. Laptop-Personalcomputer nach Anspruch 8, außerdem enthaltend Schaltmittel (31, 33), die integral auf der Oberfläche der Handflächenstütze angeordnet sind.

10. Laptop-Personalcomputer nach Anspruch 9, wobei die Tastatur (11) über die Handflächenstütze (9) hochsteht.

11. Laptop-Personalcomputer nach einem der vorhergehenden Ansprüche, wobei das Cursor-Steuergerät (12) ein Sensorfeld ist.

12. Laptop-Personalcomputer nach Anspruch 1, wobei das Cursor-Steuergerät (12) allgemein zentral auf der Fläche der Handflächenstütze (9) angeordnet ist.

## Revendications

1. Un ordinateur personnel portatif comprenant:
un boîtier principal (1);
un boîtier (2) d'affichage qui inclut un écran d'affichage (3), ledit boîtier d'affichage étant accouplé audit boîtier principal par un moyen d'accouplement (7) ;
un clavier (11) pour entrer des données dans ledit ordinateur personnel portatif, ledit clavier incluant une série de touches agencées en rangées incluant une première rangée de touches et une deuxième rangée de touches distales par rapport audit moyen d'accouplement (7), ledit clavier (11) étant disposé sur ledit boîtier principal (1);
un dispositif de commande (12) à curseur pour déplacer un curseur (50) sur ledit écran d'affichage, ledit dispositif de commande de curseur commandant un déplacement simultané dudit curseur dans deux directions;
et la première rangée de touches étant adjacente, de façon proximale, audit moyen d'accouplement (7) qui est adjacent de façon proximale à une première partie dudit écran d'affichage; et ledit dispositif de commande (12) de curseur étant intégré dans ledit boîtier principal (1);
caractérisé en ce que:
un repose-paumes (9) est situé adjacent à ladite deuxième rangée de touches, ledit repose-paumes (9) étant une surface disposée d'un seul tenant sur ledit boîtier principal (1) et étant d'une largeur appropriée pour supporter les paumes d'un utilisateur tandis qu'un utilisateur est en train d'utiliser le clavier ou le dispositif de commande de curseur.

2. Un ordinateur portatif selon la revendication 1, dans lequel ledit moyen d'accouplement (7) est une charnière rotative et dans lequel ladite première rangée de touches est adjacente à ladite charnière rotative.

3. Un ordinateur personnel portatif selon la revendication 1, dans lequel ledit moyen d'accouplement (7) est situé près de l'une des extrémités dudit boîtier principal (1) et dans lequel ledit clavier (11) comprend une rangée de touches qui inclut des touches de repos, et dans lequel ledit clavier est disposé d'un seul tenant sur ledit boîtier principal (1) et dans lequel ledit repose-paumes (9) est disposé d'un seul tenant en formant une partie significative de ladite surface dudit boîtier principal (1) et est disposé de manière à supporter les paumes d'un utilisateur tout en permettant aux doigts de l'utilisateur de rester sur les touches de repos dudit clavier (11).

4. Un ordinateur personnel portatif selon la revendication 1, 2 ou 3, dans lequel ladite partie (9) de repose-paumes est configurée pour présenter une pente douce par rapport à la surface inférieure dudit boîtier principal (1).

5. Un ordinateur personnel portatif selon la revendication 1, 2 ou 3, dans lequel ladite partie (9) de repose-paumes est une surface plate, sans aucune pente par rapport à la surface inférieure dudit boîtier principal (1).

6. Un ordinateur personnel portatif selon l'une quelconque des revendications précédentes, dans lequel le dispositif de commande (12) de curseur est intégré avec ledit repose-paumes (9).

7. Un ordinateur personnel portatif selon l'une quelconque des revendications précédentes, dans lequel ledit dispositif de commande (12) de curseur est accessible des deux mains par l'utilisateur tandis qu'il actionne le clavier (11).

8. Un ordinateur personnel portatif selon la revendication 2 ou la revendication 4, dans lequel ledit boîtier (2) d'affichage couvre, après rotation vers sa position fermée, ledit clavier (11), ledit dispositif (12) de curseur et ledit repose-paumes (9).

9. Un ordinateur personnel portatif selon la revendication 8 qui comprend en outre un moyen commutateur (31, 33) disposé d'un seul tenant sur ladite surface dudit repose-paumes.

10. Un ordinateur personnel portatif selon la revendication 9 dans lequel ledit clavier (11) est surélevé au-dessus dudit repose-paumes (9).

11. Un ordinateur personnel portatif selon l'une quelconque des revendications précédentes, dans lequel ledit dispositif de commande (12) de curseur est un pavé tactile.

12. Un ordinateur personnel portatif selon la revendication 1, dans lequel ledit dispositif de commande (12) de curseur est disposé généralement au centre sur ladite surface dudit repose-paumes (9).
